# EUROPÄISCHE PATENTANMELDUNG

(11) **EP 0 545 850 A1**
(43) Veröffentlichungstag der Anmeldung: **09.06.1993**
(21) Anmeldenummer: 92710033.9
(22) Anmeldetag: 25.11.1992
(51) Int. Cl.: C04B 14/40, C04B 18/16, C04B 7/24, A62D 3/00

(54) **Verwendung von Rückständen der Asbestzersetzung als Zuschlagstoff für Baustoffe**

(30) Priorität: 04.12.1991 DE 4139927
(71) Anmelder: SOLVAY UMWELTCHEMIE GmbH, D-30173 Hannover (DE); Solvay Fluor und Derivate GmbH, D-30173 Hannover (DE)
(72) Erfinder: Swidersky, Hans-Walter, W-3000 Hannover 1 (DE); Legat, Werner, W-3000 Hannover 51 (DE); Born, Thomas, W-3201 Holle 5 (DE); Greilich, Jürgen, W-3044 Rodenberg (DE)
(74) Vertreter: Lauer, Dieter, Dr.

(57) **Zusammenfassung**

Rückstände der Asbestzersetzung wurden bislang deponiert. Die Erfindung schlägt vor, Rückstände der Zersetzung von Asbest mit Fluor enthaltenden anorganischen Säuren, insbesondere Flußsäure oder Hexafluorokieselsäure, bei der Herstellung von Baustoffen zuzusetzen. Beispielsweise kann man Asbestzement, der derart dekontaminiert wurde, zur Herstellung von abbindefähigem Zement verwenden, indem man die Rohstoffe (Kalkstein, Ton, Mergel, Tonmergel u. a.) teilweise oder vollständig durch den dekontaminierten Asbestzement ersetzt und die Mischung brennt. Die Rückstände können auch, zusammen mit hydraulischen oder nichthydraulischen Bindemitteln zur Herstellung nichtgebrannter Baustoffe verwendet werden. Auf diese Weise wird die Deponierung des zersetzten Asbestrückstandes unnötig.

## Beschreibung

Die Erfindung bezieht sich auf ein Verfahren zur Herstellung von Baustoffen unter Verwendung von Rückständen der Asbestzersetzung als Zuschlagstoff.

Serpentin und Amphibolasbest, in Form von beispielsweise Asbestzerment, Asbestdichtungen, Spritzasbest und anderen Formen, weist bekanntermaßen gesundheitsgefährdende Eigenschaften auf. Asbestzement wurde viele Jahre als preisgünstiger Werkstoff in der Bauindustrie, z. B. als Verkleidungsmaterial und als Dachbedeckungsmaterial, verarbeitet. Im Wasserbau wurde es für Rohre verwendet, in Kraftwerken als Kondensatableiter in Kühltürmen. Es ist zwar wünschenswert, dieses gesundheitlich problematische Material zu entsorgen; es ist jedoch schwierig, die riesige Menge (geschätzt werden 25 Millionen Tonnen allein an Asbestzement in Deutschland) gefahrlos zu deponieren.

Die deutsche Patentanmeldung DE-OS 40 27 844 beschreibt ein Verfahren zur Zersetzung von Asbest. Dabei wird der Asbest in zerkleinerter Form mit Fluor enthaltenden anorganischen Säuren oder entsprechenden Alkali- oder Ammoniumsalzen vermischt und, gegebenenfalls unter Erhitzen, zersetzt. Das zersetzte Material ist deponierfähig, da gefährliche Asbestfasern nicht mehr nachweisbar sind.

Die Rückstände der Zersetzung von Asbest enthalten als Hauptbestandteile Calcium, Fluor, Silicium und als Rest Wasser. Die Werte können je nach Herkunft des zersetzten Asbests schwanken. Typischerweise sind bei Zersetzung mit Flußsäure etwa 40 Gew.-% Calcium, etwa 32 Gew.-% Fluor, etwa 4 bis 5 Gew.-% Silicium, etwa 4 Gew.-% Eisen sowie geringere Mengen Natrium, Kalium und Magnesium enthalten. Dies sind natürlich nur Anhaltswerte. Die Rückstände können auch mehr oder weniger der genannten Elemente enthalten. Wird die Zersetzung mit Salzen von Fluor enthaltenden anorganischen Säuren durchgeführt, sind in den Zersetzungsrückständen auch noch entsprechende Mengen des jeweils verwendeten Kations der Säure vorhanden. Geht man aus von Asbestzement, sind auch noch unzersetzte Zementbestandteile in der Reaktionsmischung enthalten. Die vorliegende Erfindung hat sich zur Aufgabe gesetzt, die bei der Zersetzung von Asbest oder Asbest enthaltendem Material mit Fluor enthaltenden anorganischen Säuren oder entsprechenden Alkali- oder Ammoniumsalzen anfallenden Rückstände einer Verwendung zuzuführen. Die Aufgabe, die der Erfindung zugrunde liegt, wird durch das erfindungsgemäße Verfahren gelöst. Das erfindungsgemäße Verfahren beruht auf der Erkenntnis, daß sich die Fluor enthaltenden Rückstände der Asbestzersetzung bei der Herstellung von Baustoffen als Zuschlagstoff verwenden lassen. Das erfindungsgemäße Verfahren zur Herstellung von Baustoffen unter Abbinden einer Vormischung oder Brennen einer Rohstoffmischung, dadurch gekennzeichnet, daß man der Vormischung oder Rohstoffmischung Rückstände der Zersetzung von Asbest mit Fluor enthaltenden anorganischen Säuren und/oder deren Alkali- oder Ammoniumsalzen als Zuschlagstoff zusetzt.

Als Säure kann man beispielsweise Fluorwasserstoff, Hexafluorokieselsäure oder Tetrafluoroborsäure sowie deren Gemische verwenden. Als saures Salz kann man beispielsweise Ammonium-, Natrium- oder Kaliumsalze der genannten Säuren, beispielsweise Ammonium-, Natrium- oder Kaliumhydrogenfluorid verwenden. Gewünschtenfalls kann man die Dekontamination des Asbestzements mit in reiner Form vorliegenden Zersetzungsmitteln bewirken, gegebenenfalls unter Erhitzen. Beispielsweise kann man den Asbestzement mit Ammoniumhydrogenfluorid vermischen und erhitzen. Vorzugsweise geht man von wäßrigen Lösungen der Fluor enthaltenden anorganischen Säuren oder von wäßrigen Lösungen eines sauren Salzes einer Fluor enthaltenden anorganischen Säure aus. Bevorzugt verwendet man Flußsäure, Hexafluorokieselsäure oder ein Gemisch der beiden, Insbesondere in Form wäßriger Lösungen. Besonders gute Wirkung erzielt man mit wäßrigen Lösungen, die 10 bis 40 Gew.-% des Zersetzungsmittels enthalten. Zweckmäßig neutralisiert man das nichtverbrauchte Zersetzungsmittel mit Kalk (CaO, Ca(OH)₂ oder CaCO₃) oder mit Kalkmilch und trennt Wasser, beispielsweise in einer Kammerfilterpresse, ab. Bevorzugt verwendet man Asbestrückstände oder Asbestzementrückstände, die durch alleinige Anwendung von Flußsäure, Hexafluorokieselsäure oder deren Gemischen, gegebenenfalls in Gel-Form mit SiO, als Verdickungsmittel und anschließender Neutralisierung mit Kalkmilch oder Branntkalk erhalten wurden.

Gemäß einer bevorzugten Variante stellt man beim Verfahren nichtgebrannte Baustoffe unter Verwendung von hydraulischen Bindemitteln oder nichthydraulischen Bindemitteln (Luftbindemitteln) her. Bei dieser Variante des Verfahrens werden Baustoffe in Form von Formkörpern erhalten. Diese Variante ist dadurch gekennzeichnet, daß zur Herstellung von nichtgebrannten Baustoffen unter Verwendung von hydraulischen oder nichthydraulischen Bindemitteln, wobei man zunächst eine Vormischung erzeugt und diese Mischung zum Baustoff abbinden läßt, wobei man der Vormischung Rückstände der Zersetzung von Asbest mit Fluor enthaltenden anorganischen Säuren und/oder deren Alkali- oder Ammoniumsalzen als Zuschlagstoff zusetzt. Die "Vormischung" umfaßt das oder die Bindemittel, die Rückstände der Asbestzersetzung und gegebenenfalls Wasser, Zuschlagstoffe wie Kies, Sand, Pigmente, Abbindebeschleuniger oder Stoffe, die das Abbinden hemmen, und gegebenenfalls andere übliche Zusatzstoffe.

Diese Variante ist somit auf die Herstellung ungebrannter (nichtgebrannter) Baustoffe beschränkt. Wichtig ist, daß die Baustoffe bei ihrer Herstellung nicht einer so hohen Temperatur ausgesetzt werden dürfen, daß Fluorwasserstoff freigesetzt wird. Vorteilhaft erwärmt man die Baustoffe bei ihrer Herstellung überhaupt nicht. Wenn man die Baustoffe höheren Temperaturen aussetzt, dann sollten diese Temperaturen nicht höher als 110 °C, vorzugsweise nicht höher als 50 °C sein. Die fertigen Baustoffe sollte man auch nicht zu solchen Zwecken verwenden, bei welchen sie derart hohen Temperaturen ausgesetzt werden, daß Fluorwasserstoff frei wird.

Bevorzugtes hydraulisches Bindemittel ist Zement, bevorzugtes nichthydraulisches Bindemittel ist Gips. Man kann aber auch andere Bindemittel verwenden, beispielsweise Natriumsilikat bzw. Wasserglas (Lösung), oder andere Luftbindemittel.

Übliche Zusatzmittel, wie Dichtungsmittel, oder Zusatzstoffe, wie Kunstharze oder Pigmente, sowie andere übliche Zuschlagstoffe wie Sand können bei der Baustoffherstellung natürlich der Vormischung beigemischt werden.

Die Rückstände aus der Asbestzersetzung werden zweckmäßig in einer Menge von 5 bis 30 Gew.-%, berechnet als Trockenmasse und bezogen auf die fertige, aber noch nicht abgebundene Vormischung aus Bindemittel, Asbestrückstand und eventuell zugesetzten weiteren Additiven, eingebracht.

Die noch nicht abgebundene Vormischung kann dann in gewünschte Form gebracht werden. Man kann sie beispielsweise zu Formsteinen oder Plattenformen, in Fall von Gips auch zu Gipsfaserplatten, und die Vormischung dann abbinden lassen. Alternativ kann man die noch nicht abgebundene Vormischung auch als Beschichtung auf beliebigen Unterlagen auftragen und dann abbinden lassen.

Gewünschtenfalls kann man die Vormischung vor oder während des Abbindens üblichen Behandlungen unterwerfen, beispielsweise kann man sie pressen. Man läßt dann wie üblich abbinden.

Eine andere Variante betrifft die Herstellung eines gebrannten Baustoffes, nämlich Zement. Diese Variante liefert keine Formkörper, sondern einen Baustoff, der seinerseits zur Herstellung von abgebundenen Baustoffen in Form von Formkörpern verwendet wird oder werden kann.

Diese Variante ist dadurch gekennzeichnet, daß man zur Herstellung von abbindefähigem Zement unter Vermischen der Rohstoffe zu einer Rohstoffmischung und Brennen der Rohstoffe die Rohstoffe teilweise oder vollständig durch dekontaminierten Asbestzement ersetzt, wobei der dekontaminierte Asbestzement durch Behandeln von Asbestzement mit einer Fluor enthaltenden anorganischen Säure als Zersetzungsmittel, gegebenenfalls Abtrennen von Wasser, aus dem resultierenden Gemisch erhalten wurde.

Eine besonders bevorzugte Ausführungsform der Erfindung ist dadurch gekennzeichnet, daß der dekontaminierte Asbestzement durch Behandeln von zerkleinertem Asbestzement mit einer wäßrigen Lösung einer Fluor enthaltenden anorganischen Säure oder einer wäßrigen Lösung eines sauren Salzes einer Fluor enthaltenden anorganischen Säure, Neutralisation des resultierenden Gemisches mit Kalk oder Kalkmilch und gegebenenfalls Abtrennen von Wasser erhalten worden ist.

Der Rohstoffmischung (übliche Rohstoffe wie Kalkstein, Ton, Kalkmergel, Tonmergel u. a. können verwendet werden) kann man den dekontaminierten Asbest in mehr oder weniger großer Menge zusetzen. Im Extremfall kann man bei dieser Variante den Rohstoff für die Zementherstellung vollständig durch den kontaminierten Asbestzement ersetzen. In diesem Fall wird eine Rohstoff-"Mischung" in den Zementofen gegeben, die bezogen auf die Trockenmasse, zu 100 Gew.-% aus dekontaminiertem Asbestzement besteht. Im Rahmen der Erfindung soll also der Begriff "Rohstoffmischung" auch diesen Grenzfall umfassen. Vorteilhaft enthält die Rohstoffmischung vor dem Brennen 3 bis 100 Gew.-%, bezogen auf die Trockenmasse, des dekontaminierten Asbestzements. Selbstverständlich kann man die Kennzahlen der Rohstoffe (Kalkstandard, Silikatmodul und Tonerdemodul) wie gewünscht einstellen.

Die Mischung wird dann in üblicher Weise gebrannt, wie üblich bei Temperaturen bis zu 1.500 °C.

Es empfiehlt sich, den Asbestzement vor der Dekontamination in kleinere Partikel zu überführen, z. B. durch Schreddern und Mahlen.

Es ist ein Vorteil der Erfindung, daß Asbest, z. B. Asbestzement, der ansonsten unter erhöhten Sicherheitsbedingungen deponiert werden müßte, als Rohstoffquelle dient und eine rückstandslose Verarbeitung zu neuen Baustoffen, z. B. Formkörpern oder hochwertigen Zementprodukten gewährleistet wird. Natürliche Ressourcen werden daher geschont. Beispielsweise kann man asbesthaltige Faserzementplatten, wie Eternitplatten, erfindungsgemäß über die Herstellung asbestfreien Faserzements und Formung in asbestfreie Faserzementplatten überführen. Außerdem hat sich gezeigt, daß durch Zugabe des mit Hilfe des angegebenen Zersetzungsmittels dekontaminierten Asbestzements ein Rohstoff oder eine Rohstoffmischung entsteht, welche beim Zementbrennen eine herabgesetzte Sintertemperatur aufweist. Die Energiekosten des Zementbrennens können daher gesenkt werden. Eine solche vorteilhafte Rohstoffmischung zum Herstellen von Zement ist ebenfalls Gegenstand der Erfindung. Die erfindungsgemäße Rohstoffmischung zum Herstellen von Zement enthält übliche, CaO, SiO₂, Al₂O₃ und Fe₂O₃ liefernde Rohstoffe, ist gekennzeichnet durch einen Gehalt von, durch Kontaktieren von Asbestzement mit einer Fluor enthaltenden anorganischen Säure oder einem sauren Salz einer Fluor enthaltenden anorganischen Säure, erhaltenen dekontaminierten Asbestzement.

Eine besonders bevorzugte Rohstoffmischung zur Zementherstellung ist gekennzeichnet durch ein Gehalt von 3 bis 99 Gew.-%, insbesondere 50 bis 99 Gew.-%, des dekontaminierten Asbestzements. Rest auf 100 % sind Zementrohstoffe wie Mergel, Kalkstein, Ton, Tonmergel sowie gegebenenfalls Wasser.

Ein weiterer Gegenstand der Erfindung sind die nach dem erfindungsgemäßen Verfahren erhältlichen Baustoffe, insbesondere entsprechende Formkörper wie Platten oder Ziegel, sowie der erhältliche Zement.

Die folgenden Beispiele sollen das erfindungsgemäße Verfahren weiter erläutern, ohne es in seinem Umfang einzuschränken.

### Beispiel 1: Herstellung eines Asbest-Zersetzungsrückstandes.

In einem 30-Liter-Kunststoffgefäß aus Polyethylen wurden 3050 g Flußsäure (HF-Gehalt: 40 Gew.-%) und 3100 g Wasser vermischt. Unter ständigem Rühren wurden dann 500 g Blauasbest zugegeben. Das Reaktionsgemisch wurde dann mit 1000 g Wasser verdünnt und weitere 2000 g Blauasbest zugegeben. Dann wurden wiederum 2000 g Wasser und 4095 g der Flußsäure zugegeben. In diese Mischung wurden dann noch einmal 364 g Asbest eingebracht. Die Reaktionsmischung wurde dann stehengelassen. Etwa 70 Minuten nach Beginn der Umsetzung war der Blauasbest vollständig zersetzt, Fasern konnten nicht mehr nachgewiesen werden.

Insgesamt wurden 2864 g Asbest und 7145 g der Flußsäure in 6100 g Wasser umgesetzt. Das Reaktionsgemisch wurde dann mit Kalkmilch (Konzentration an CaOH: 20 Gew.-%) neutralisiert.

### Beispiel 2: Herstellung eines Betons.

50 g des gemäß Beispiel 1 in Form einer Suspension anfallenden neutralisierten Reaktionsgemisches wurden mit 250 g Zement vermischt und zu einem Würfel geformt. Nach 7 Tagen war die Masse zu einem festen Formstein aus Beton ausgehärtet.

### Beispiel 3: Herstellung eines Betons unter Verwendung von Sand.

100 g des als Suspension anfallenden neutralisierten Gemisches aus Beispiel 1 wurden mit 40 g Zement und 70 g Sand vermischt und zu einem Würfel geformt. Nach 7 Tagen war die Masse zu einem Formstein aus Beton verfestigt.

### Beispiel 4: Herstellung eines Formkörpers unter Verwendung von Gips als Bindemittel.

50 g des als Suspension anfallenden Asbestzersetzungsrückstandes aus Beispiel 1 wurden mit 160 g Gips vermischt und zu einem Würfel geformt. Nach 7 Tagen war die Masse zu einem Formstein aus Gips erhärtet.

### Beispiel 5: Herstellung eines Formkörpers mit Wasserglas.

Ein Teil des in Beispiel 1 hergestellten, als Suspension anfallenden Zersetzungsrückstandes wurden zunächst über einen Filter gegeben. Dabei fiel ein fester Filterkuchen an. 100 g des Filterkuchens wurden mit 20 g Wasserglas (30 Gew.-%-ig) vermischt. Die zuerst gallertartige Masse wandelte sich allmählich in einen festen Formkörper um.

### Beispiel 6: Dekontaminierter Asbestzement als Zement-Rohstoff

10 kg Asbestzement (90 Gew.-% hydratisierter Zement) wurde geschreddert und auf eine Partikelgröße von maximal 0,5 mm gemahlen. Der Asbestzement wurde dann mit 5 l einer 20 Gew.-% HF enthaltenden wäßrigen Flußsäure-Lösung kontaktiert. Nach 15 Minuten wurde die entstehende Reaktionsmischung unter Versetzten mit Kalkmilch neutralisiert. Die entstandene Suspension (eine breiige Masse) von Zement und Calciumfluorid wurde direkt in den Zementofen gegeben. Das Brennen erfolgte bei einer Temperatur von 940 °C.

## Patentansprüche

1. Verfahren zur Herstellung von Baustoffen unter Abbinden einer Vormischung oder Brennen einer Rohstoffmischung, dadurch gekennzeichnet, daß man der Vormischung oder Rohstoffmischung Rückstände der Zersetzung von Asbest mit Fluor enthaltenden anorganischen Säuren und/oder deren Alkali- oder Ammoniumsalzen als Zuschlagstoff zusetzt.

2. Verfahren nach Anspruch 1, dadurch gekennzeichnet, dkaß man zur Herstellung von nichtgebrannten Baustoffen unter Verwendung von hydraulischen oder nichthydraulischen Bindemitteln, wobei man zunächst eine Vormischung erzeugt und diese Mischung zum Baustoff abbinden läßt, der Vormischung Rückstände der Zersetzung von Asbest mit Fluor enthaltenden anorganischen Säuren und/oder deren Alkali- oder Ammoniumsalzen als Zuschlagstoff zusetzt.

3. Verfahren nach Anspruch 2, dadurch gekennzeichnet, daß das Bindemittel Zement ist.

4. Verfahren nach Anspruch 1, dadurch gekennzeichnet, daß das Bindemittel Gips ist.

5. Verfahren nach einem der vorhergehenden Ansprüche, dadurch gekennzeichnet, daß man die Rückstände der Zersetzung von Asbest in einer Menge von 5 bis 30 Gew.-%, bezogen auf das Gesamtgewicht der Vormischung zusetzt.

6. Verfahren nach einem der vorhergehenden Ansprüche, dadurch gekennzeichnet, daß man die Vormischung vor dem Abbinden in geformte Körper überführt.

7. Verfahren nach einem der vorhergehenden Ansprüche, dadurch gekennzeichnet, daß man die Vormischung beim Abbinden einer Temperatur von maximal 110 °C vorzugsweise maximal 50 °C, aussetzt.

8. Verfahren nach Anspruch 1, dadurch gekennzeichnet, daß man zur Herstellung von abbindefähigem Zement als gebranntem Baustoff unter Vermischen der Rohstoffe zu einer Rohstoffmischung und Brennen der Rohstoffmischung die Rohstoffe teilweise oder vollständig durch als Rückstand der Asbestzersetzung anfallenden dekontaminierten Asbestzement als Zuschlagstoff ersetzt, wobei der dekontaminierte Asbestzement durch Behandeln von Asbestzement mit einer Fluor enthaltenden anorganischen Säure und/oder einem sauren Salz einer Fluor enthaltenden anorganiscshen Säure als Zersetzungsmittel, gegebenenfalls Neutralisieren des resultierenden Gemisches und gegebenenfalls Abtrennen von Wasser, aus dem resultierenden Gemisch erhalten wurde.

9. Verfahren nach Anspruch 8, dadurch gekennzeichnet, daß der dekontaminierte Asbestzement durch Behandeln von zerkleinertem Asbestzement mit einer wäßrigen Lösung einer Fluor enthaltenden anorganischen Säure oder einer wäßrigen Lösung eines sauren Salzes einer Fluor enthaltenden anorganischen Säure, Neutralisieren des entstehenden Gemisches mit Kalk oder Kalkmilch und gegebenenfalls Abtrennen von Wasser erhalten wurde.

10. Verfahren nach einem der vorhergehenden Ansprüche, dadurch gekennzeichnet, daß man als Zersetzungsmittel Flußsäure, Hexafluorokieselsäure oder ein Gemisch der beiden verwendet.

11. Verfahren nach einem der vorhergehenden Ansprüche, dadurch gekennzeichnet, daß man eine wäßrige Lösung mit 10 bis 40 Gew.-% des Zersetzungsmittels einsetzt.

12. Verfahren nach einem der Ansprüche 8 bis 11, dadurch gekennzeichnet, daß die Rohstoffmischung vor dem Brennen 3 bis 100 Gew.-% des dekontaminierten Asbestzements, bezogen auf die Trockenmasse enthält.

13. Rohstoffmischung zum Herstellen von Zement, enthaltend übliche, CaO, SiO₂, Al₂O₃ und Fe₂O₃ liefernde Rohstoffe, gekennzeichnet durch einen Gehalt von, durch Kontaktieren von Asbestzement mit einer Fluor enthaltenden anorganischen Säure oder einem sauren Salz einer Fluor enthaltenden anorganischen Säure, erhaltenen dekontaminierten Asbestzement.

14. Rohstoffmischung nach Anspruch 13, gekennzeichnet durch einen Gehalt von 3 bis 99 Gew.-%, bezogen auf die Trockenmasse, an dekontaminiertem Asbestzement.

15. Baustoffe, erhältlich gemäß einem Verfahren der Ansprüche 1 bis 12.
